# EUROPEAN PATENT SPECIFICATION

(11) **EP 3 203 599 B1**
(45) Date of publication and mention of the grant of the patent: **12.12.2018**
(21) Application number: 17154473.7
(22) Date of filing: 02.02.2017
(51) Int. Cl.: H02J 7/00, H01M 10/44, B60L 11/18, H01M 10/42

(54) **COMPLEMENTARY ENGAGEMENT OF BATTERY BANKS TO AUGMENT LIFE, PERFORMANCE AND CAPACITY OF OVERALL ENERGY STORAGE SYSTEM**
BATTERIEN BANK ZUR VERLÄNGERUNG DER LEBENSDAUER, WIRKUNGSGRAD UND KAPAZITÄT DES ENERGIESPEICHERS
BANCS DE BATTERIES POUR PROLONGER LA DURÉE DE VIE, LA PERFORMANCE ET LA CAPACITÉ D'UN DISPOSITIF DE STOCKAGE D'ÉNERGIE

(30) Priority: 05.02.2016 IN 201641004169
(43) Date of publication of application: 09.08.2017
(73) Proprietor: Indian Institute of Technology Madras (IITM), Chennai, Tamil Nadu 600036 (IN); Reliance-IITM Telecom Centre of Excellence, 600 113 Chennai (IN)
(72) Inventor: JHUNJHUNWALA, Ashok, 600 036 Chennai (IN); KAUR, Prabhjot, 600 113 Chennai (IN); RAMAMURTHI, Bhaskar, Adyar, Chennai 600 036 (IN)
(74) Representative: Browne, Robin Forsythe

(56) References cited:
- EP-A2- 2 307 226
- US-A1- 2013 026 822
- US-A1- 2013 175 975

## Description

### TECHNICAL FIELD

The embodiments herein generally relate to an energy storage system, and more particularly, to an energy storage system including a plurality of battery banks of different characteristics.

### BACKGROUND

The demand for clean energy has risen rapidly in recent years, especially energy provided through rechargeable batteries or any other energy sources. As a result, rechargeable batteries are being used in more and more applications to provide power to automobiles, tools, electronics, computers, homes, and so on. The batteries are most expensive part of a power system and using battery storage as a source of power increases cost of power multi-fold. The rapid increase in a number of batteries has accordingly increased the need for efficient engagement and utilization of such batteries. These batteries are chargeable, but the charging opportunity available is intermittent (when one is next to a power source for some significant time). Similarly some energy sources have limited fuel-charging opportunities.

Generally, there are certain parameters that characterize the batteries and its selection for a particular application. Some of the decisive parameters are chemistry of battery, variability in its chemistry, energy density, size, weight and cost etc. A combination of such parameters contribute to battery life, measured in terms of number of charge-discharge cycles, and help in making decisions on the most important factors in selecting a battery. The battery life in turn depends on how the battery is used, in particular, Depth of Discharge (DoD), rates of charging and discharging, operating temperature etc. These parameters, and especially battery life, also greatly influence costs. The battery life greatly influences overall cost of usage, as one has to replace batteries after expiry of life-time. In the conventional systems (like an electric car), most of the applications use a single battery bank of a single kind, with the choice made based on costs, life-cycles, energy-density, or the like.

In Certain applications, however, such as diesel trucks, laptops and boats where multiple batteries are used, frequency of usage of multiple battery banks is different as charging opportunity may vary from day to day. If all of the battery banks are not effectively engaged to provide the necessary power, the vehicle may fail to start or function appropriately. Such applications generally will not automatically engage and utilize multiple battery banks effectively, or in a cost-conscious manner.

Further, mobile applications such as electric vehicles, laptops, cell-phones or the like use a battery which is charged when the battery is about to run out or when there is a charging opportunity available. User may like to have largest size battery, so that system can be used for long time without charging but it contributes to increase size, weight and cost of such mobile appliances / equipment.

The above information is presented as background information only to help the reader to understand the present invention. Applicants have made no determination and make no assertion as to whether any of the above might be applicable as Prior Art with regard to the present application.

US 2013026822 discloses an energy storage system and related method. The system may comprise a power management system and a plurality of energy banks coupled to the power management system, wherein each of the plurality of energy banks is capable of being independently discharged through the power management system. The power management system is configured to select at least one of the plurality of energy banks to transfer energy between the energy storage system and a machine powered using the energy storage system. US 2013026822 does not discloses, in the wording of the claims, "derived by a splitter", "on a probability distribution function", "preconfigured with the pdf', "driving battery bank in sequential order from the plurality of battery banks" and "wherein the selection of at least on battery bank is based on the pdf".

EP 2307226 discloses methods and systems for controlling a power transfer rate in to and/or out of a vehicle energy storage device to affect a current state of charge of the energy storage device. The vehicle may be on a mission comprising a plurality of future power transfer opportunities. In one example, the method comprises adjusting the power transfer rate based on an estimated duration of a future power transfer opportunity.

US 20130175975 discloses a battery system for a movable object. The battery system is mounted on the movable object having a charger and a load unit including a plurality of loads electrically driven for different purposes. The battery system is provided with a plurality of battery packs, a power control circuit for changing a connection state between the battery packs and the charger and a connection state between the battery packs and the load unit, a memory unit for storing operation information, an estimation unit for estimating a power consumption pattern in the operation cycle based on the operation information and a controller for switching the power control circuit to cover the power consumption by the load unit according to the power consumption pattern.

### OBJECT OF INVENTION

The principal object of the invention is to split a battery into a plurality of banks as energy source in an energy storage system, where each bank may be of different characteristic, vis-à-vis, chemistry, energy density, lifetime, weight, cost, and so on, to optimize life, cost, weight or size of the overall storage system, without compromising on hours of usage or the range that battery would provide for a vehicle to travel. The division of a battery bank is decided by the usage pattern between two charging opportunities.

Another object of the invention is to enable use of individual battery bank in sequence based on pre-defined priorities of usage, wherein banks are used such that the order of priority is maintained and a bank is drained as per set limit before a subsequent bank is used.

Yet another object of the invention is to enable use of a combination of battery banks to provide required total current for discharging based on load conditions.

Still another object of the invention is to enable automatic and dynamic selection of one battery bank or a combination of battery banks for discharge through the use of a battery bank selector, to optimize battery system performance based on one or more configurable parameters.

Still another object of invention is to provide discharging sequence by appropriately switching between one battery to another upon arrival of charging opportunity in a manner to improve overall lifetime and performance of battery system.

### SUMMARY

According to a first aspect of the invention there is provided an energy storage system, the energy storage system comprises:
a plurality of battery banks of individual batteries based on split configuration derived by a splitter, wherein split battery configuration of the plurality of banks varies based on a probability distribution function (pdf) of expected usage pattern, optimization goal, and battery characteristics of a corresponding single battery system; and
a logic unit, pre-configured with the pdf and connected to the plurality of battery banks, configured to:
   obtain performance data of each of the battery banks;
   select at least one battery bank, from the plurality of battery banks to provide power to a load based on performance data of each said battery banks and at least one selection criterion; and
   driving battery bank in sequential order from the plurality of battery banks until next charging opportunity;
wherein the split from a single battery bank is to optimize at least one among cost, weight or size of the system; and
wherein the selection of at least one battery bank is based on the pdf; and
wherein the selection of battery banks is to optimize at least one among weight, cost, size, and life of the system for the usage pattern without compromising on the range of the system.

According to a second aspect of the invention there is provided an energy management method for an energy storage system configured with a plurality of battery banks, the method comprises:
deriving a split battery configuration with a plurality of battery banks by a splitter, wherein the split battery configuration of the plurality of banks varies based on a probability distribution function (pdf) of expected usage pattern, optimization goal, and battery characteristics of a corresponding single battery system;
obtaining, by the energy storage system, performance data of said plurality of battery banks;
selecting, by the energy storage system, at least one battery bank to provide power to a load based on desired performance and at least one selection criterion; and
driving battery bank in sequential order from the plurality of battery banks until next charging opportunity,
wherein the split from a single battery bank is to optimize at least one among cost, weight or size of the system and wherein the selection of at least one battery bank is based on the pdf, and wherein the selection of battery banks is to optimize at least one among weight, cost, size, and life of the system for the usage pattern without compromising on the range of the system.

Each battery bank may be different based on at least one among chemistry, variability in chemistry, energy density, size, weight, and cost.

The required storage capacity may be obtained by using plurality of battery banks aiding the performance, and reducing the total cost of the system by using the required battery bank or battery banks according to the selection criterion.

The criteria may be configured to select a battery bank out of the plurality of battery banks in a sequential order according to usage requirements based on pre-defined priorities for the plurality of battery banks or in an adaptive manner based on the matrices chosen for a given application.

The logic unit may be further configured to dynamically switch from a first energy harnessing mode to a second energy harnessing mode, wherein said harnessing modes are based on usage parameters.

The selection criteria may comprise at least one threshold dynamically defined based on the plurality of usage parameters.

The selection criteria may depend upon the said battery usage parameters comprising at least one among Depth of Discharge (DoD), rate of charging, rate of discharging, and operation temperature which vary based on the application usage of the system.

Performance data may comprise at least one of a state of charge, generated current, generated voltage, state of health and lifetime of the battery bank(s).

The logic unit may be further configured to update its logic based on said pre-configured pdf with an updated pdf based on actual usage patterns observed.

The frequency of use of different battery banks and life of the batteries from said plurality of battery banks may vary based on usage probability distribution function in use.

Accordingly, the embodiments herein provide an energy storage battery system constituting multiple banks of individual batteries, each of which may have different characteristics, and methods of operation of the system. The system includes at least a plurality of battery banks of individual batteries based on split configuration derived by a splitter, and a logic control unit. The split battery configuration of the plurality of banks varies based on a probability distribution function (pdf) of expected usage pattern, optimization goal, and battery characteristics of a corresponding single battery system.

In a preferred embodiment, the logic unit is pre-configured with the pdf and connected to the plurality of battery banks, is configured to obtain performance of each of the battery banks. The logic control further selects at least one battery bank, from the plurality of battery banks, to provide power to a load based on current performance data of each said battery banks and at least one selection criterion. The logic control rotates use of battery banks from the plurality of battery banks until next charging opportunity.

The split configuration derived using the splitter is to optimize at least one of cost, weight or size of the system. The selection of at least one battery bank is based on the pdf. The selection of battery banks is to optimize at least one among weight, cost, size, and life of the storage system for the given usage pattern without compromising on the range of the system.

### BRIEF DESCRIPTION OF THE FIGURES

This invention is illustrated in the accompanying drawings, throughout which like reference letters indicate corresponding parts in the various figures. The embodiments herein will be better understood from the following description with reference to the drawings, in which:
FIG. 1 illustrates multiple banks of individual batteries to be used in an energy storage system, according to an embodiment herein;
FIG. 2 illustrates process of arriving at a split battery configuration, according to an embodiment herein;
FIG. 3A and FIG. 3B illustrate an example of the sequential usage of battery banks until next charging happens using a three battery bank system as an example, according to an embodiment herein;
FIG. 4 is one such example indicating statistical usage of vehicle between two charging opportunities, assuming that the total battery capacity allows vehicle to travel up to 150 km while using the battery in the range not impacting the life of the battery adversely, according to an embodiment herein;
FIG. 5 illustrates an example implementation of energy storage system, according to an embodiment;
FIG. 6 illustrates the switching of the batteries based on a single threshold minimum SOC Bₘᵢₙ in a three bank battery system, according to a preferred embodiment;
FIG. 7 illustrates an energy storage system to provide power to a load 706, according to an embodiment; and
FIG. 8 is a flow chart illustrating example logic for switching from using single battery bank to using multiple battery banks, according to an embodiment herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as not to unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Prior to describing the present invention in detail, it is useful to provide definitions for key terms and concepts used herein. Unless defined otherwise, all technical and scientific terms used herein have the same meaning as commonly understood by one of ordinary skill in the art to which this invention belongs.

Charging opportunity: when the user gets access to a source of power to charge battery for a considerable period of time.

Battery usage and Range / hours of usage: battery is usually operated in some range of DOD (say 10% to 90% DOD) to not severely affect the life of the battery, and avoiding deep-discharge. The Range / hours of usage referred to here, is assumed to be when the battery is used in this range.

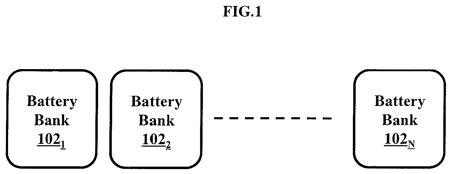

Referring now to the drawings, and more particularly to FIGS. 1 through 8, where similar reference characters denote corresponding features consistently throughout the figures, there are shown preferred embodiments.

The embodiments herein provide an energy storage battery system constituting multiple banks of individual batteries, as illustrated in FIG. 1, each of which may have different characteristics, vis-à-vis, chemistry, energy density, lifetime, weight, cost, and so on. Splitting of the energy storage battery system into banks is chosen based on statistics of usage of the battery, as discussed in [0015].

The splitting of a battery involves identifying and selecting a set of battery banks corresponding to a single battery to achieve an optimization goal. An optimization goal can include but is not limited to lower cost, lower weight, lower size, and increase lifetime of the energy storage system as a whole.

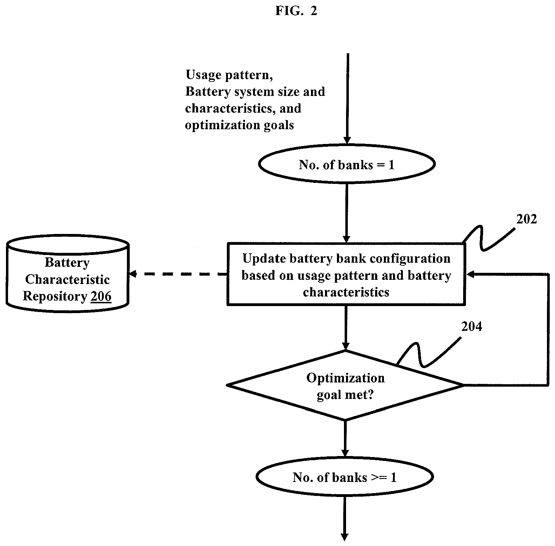

FIG. 2 illustrates process of arriving at a split battery configuration, according to an embodiment herein. The process of splitting according to various embodiments herein can be enabled by a splitter configured to accept optimization goal, usage pattern information, and characteristics of a single battery as initial input. The computer can perform heuristic based analysis to update (202) the battery configuration from input battery configuration. In performing the heuristic analysis, the computer can check external battery characteristic repository (206) containing information about various batteries with varying characteristics including but not limited to cost, weight, size, chemistry, and so on. The computer checks (204) to see if the updated battery configuration achieves the optimization goal. If the optimization goal is not met, the computer further updates the battery configuration towards achieving the optimization goal.

The splitter may be a custom hardware device having embedded software with logic necessary to arrive at a split battery configuration according to FIG. 2. The logic that the custom computer can employ to arrive at a split battery configuration is described hereunder through various examples.

In various embodiments, the computer can adopt available machine learning techniques to learn from previous battery configurations and, therefore, to provide more accurate battery configurations for the input optimization goals.

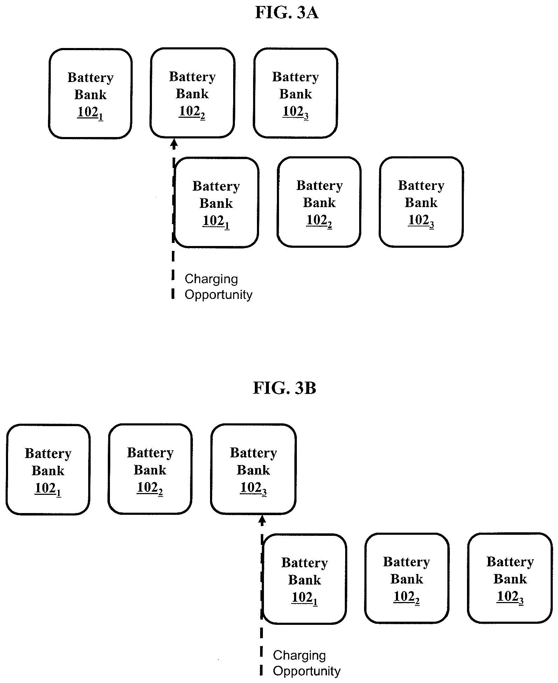

In a preferred embodiment, the battery banks are configured to be used/discharged in a sequence based on pre-defined priorities for the usage of the battery banks, where a bank is drained as per set limit before a subsequent bank is used. The discharge sequence is reset as soon as a charging opportunity arrives. FIG. 3A and FIG. 3B illustrate an example of the sequential usage of battery banks until next charging happens using a three battery bank system as an example. In FIG. 3A, the discharge starts with battery bank 102₁ and proceeds to 102₂. While the battery bank 102₂ is in the process of discharge, a charging opportunity arrives. Upon the charging event, the battery system reverts to using battery bank 102₁. Similarly, in FIG. 3B, the charging opportunity arrives when the battery bank 102₃ is in process of discharge subsequent to full discharge of batter banks 102₁ and 102₂. The battery system reverts to using battery bank 102₁ after charging. This implies that bank 102₁will be discharged-charged used more often than bank102₂, which in turn will be used more often than bank 102₃. The charging of all the battery-banks, on the other hand is to take place simultaneously, in parallel.

### Example application: Electric vehicles

### Cost considerations

By using battery banks of different characteristics, embodiments herein allow for reducing overall cost or weight or size or a combination thereof of the battery system as compared of a battery system with single bank with desired characteristics. Hereafter, electric vehicles are considered as an application for such a battery system. Vehicles are driven to different extent at different time of day and on different days at a time. Some days, one drives short distances and some other days a bit longer. On other days, one may drive for really long completely exhausting battery capacity of the vehicle. And, therefore, the time between two charging opportunities also varies. A charging opportunity implies that the vehicle is present near a power-source, where there is a charger for sufficient duration to get charged to the required extent. The energy storage system (meaning, the battery system) of the vehicle would normally be charged fully during a charging opportunity, but need not be fully charged in a single charging opportunity.

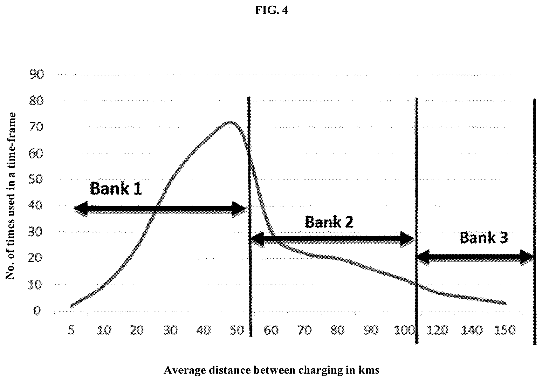

FIG. 4 is one such example indicating statistical usage of vehicle between two charging opportunities, assuming that the total battery capacity allows vehicle to travel up to 150 km while using the battery in the range not impacting the life of the battery adversely. The numbers are chosen in example by way of illustration and could be completely different numbers without altering the logic of argument here. Battery system considered has three banks, each of which enables vehicle to travel 50 km during normal usage without deep-discharge. The FIG. 4 in other words, represents the probability density function (pdf) of vehicle usage between two charging opportunities, which is not normalized, and will represent true pdf if divided by the total area under the curve. As shown, most of the time, the vehicle travels less than 50 km and therefore uses only bank 1 before getting charging opportunity. However, at times, the vehicle travels between 50 km to 100 km before getting charging opportunity and there for uses both banks 1 and 2. Still less number of times it travels above 100 km before it gets charging opportunity and therefore uses banks 1, 2 and 3. The area under each of the three curves (separated by vertical lines at 50 km and 100 km) normalized by dividing the total area of the curve, provides the percentage of time only bank 1 is used or when banks 1 and 2 are used and when banks 1, 2 and 3 are used. In the example, 70% of time, distance driven is less than 50 km, 25% of time it is driven between 50 and 100 km, and 5% of time the distance between charging opportunity is beyond 100 km.

Now, consider three banks of batteries (named, B1, B2, and B3)as an example, each with capacity to enable distance travelled as 50 km, and with properties as provided in Table 1 hereunder.

**Table 1: Properties of battery banks B1, B2, and B3**

| | **B1** | **B2** | **B3** |
|---|---|---|---|
| **Life Cycles** | 3000 | 900 | 150 |
| **Cost** | 8 | 4 | 1 |
| **Usage** | 100% usage time | 30% usage time, along with B1 | 5% usage time, along with B1 and B2 |

In the example configuration provided in Table 1,B1 has much higher number (3000) of charge-discharge cycles, B2 has lesser cycles (900), and B3 has even lesser (only 150). The battery bank costs decrease significantly with decrease in life-cycle requirements and one can choose the bank with appropriate chemistry or other characteristics to optimise the costs. In the example configuration,B2 could cost half of the cost of B1 and B3one eighth the cost of B1. If the cost of B3isX, the total cost of three banks would be 13X.A single battery bank used in a conventional system with 3000 charge discharge cycles would have to be of B1 type and would cost three times that of B1 because its size is three times that of B1 and therefore the total costs would work out to be 24X.This is almost double of 13X, the costs of a three-bank battery. Thus dividing the battery into banks and using batteries of appropriate characteristics for each bank, one can save costs. Alternatively, one can reduce weight, reduce size or even increase the range.

### Performance considerations

Embodiments herein allow reducing costs without degradation in performance of the battery system. According to FIG. 4, 70% of time vehicle is going to drive less than 50 km before the next charging opportunity. Therefore, B 1 alone will be used 70% of the time. In a preferred embodiment, B2 is used only after B1 completely discharges, and B3 only after B1 and B2 completely discharge. Furthermore, B2 along with B1 will be used approximately 25% of time (for driving distance between 50 and 100 km), and B3 along with B1 and B2 will be used about only 5% of time (for driving distance beyond 100 km). Since B1 has been chosen to be 3000 charge discharge cycles and is used in all journeys, the vehicle can perform 3000 journeys between changes. B2 is used only when vehicle travels beyond 50 km, which happens only in 30% of journeys. Therefore, 900 cycles should be adequate for B2 (as opposed to 3000 cycles). Consequently, a lower cost battery can be chosen for B2. Further, B3 is used only in 5% of journeys, and, hence, 150 cycles are should be adequate for B3 to last as long as B1 and B2. Therefore, B3 can have lower cost batteries when compared to B2. We have assumed in the above calculations that DOD does not play a role in life-cycles. Lower DOD, as would be the case if the battery is charged after less than 150 km drive, even for a single bank battery would help extend the life-cycles beyond 3000.

But the degradation of battery life as the battery is used year after year will start impacting more now. Similarly, as DOD will vary for trip to trip even for each bank of the three battery-bank system, the batteries could last longer. The advantage for a single battery would not be therefore as significant as the cost reduction discussed above.

### Weight considerations

Apart from optimizing cost and performance, the battery system according to embodiments herein can also be used to manage overall weight of system. Table 2 provides an example configuration of battery banks.

**Table 2**

| | **B1** | **B2** | **B3** |
|---|---|---|---|
| **Usage** | 100% of times | 30% of times | 5% of time |
| **Weight** | W | W | W/2 |
| **Cycles** | 3000 | 900 | 150 |
| **Capacity** | X | X | X |

In the example configuration provided in Table 2, battery bank B 1 is used 100% of the time with 3000 cycles, B2 is used 30% of the time with 9000 cycles, and B3 is used 5% of the time with 150 cycles. We select the three batteries such that while B1 and B2 are of same weight W, B3 is selected to be lighter and say it weighs W/2. Thus the weight of all the battery banks would be 2.5W. In contrast, a traditional single bank battery system, which is three times B1, would weigh 3W. Thus the banks may enable us to reduce weight as opposed to single bank, without compromising on performance.

In various embodiments, with multiple battery banks, performance can be further optimized to give longer range without increasing the weight of the system. Table 3 provides such an example configuration of the battery system according to embodiments herein. Here the capacity is doubled when keeping the weight of B3, same as that of B 1 and B2.

**Table 3**

| | **B1** | **B2** | **B3** |
|---|---|---|---|
| **Usage** | 100% of times | 30% of times | 5% of time |
| **Weight** | W | W | W |
| **Cycles** | 3000 | 900 | 150 |
| **Capacity** | X | X | 2X |

In Table 3, the capacity of third bank B3 is chosen to be twice the size of that of B1 and B2, giving twice the range that B1 or B2 would provide. This is an example of unequal size (in capacity) banks. Assuming the costs of each of the batteries in each bank to be same as was in Table 1 for same capacity, the costs would now be 14X as opposed to 24X for single bank battery. The total weight is same as that of single bank battery. The range supported however is now 200 km as opposed 150 km for single battery. The driving distance now increases, to 4/3 times of that of a single bank, as total battery capacity of three banks is equal to 4/3 times of battery capacity of single bank.

The splitting of the battery into banks is based on pdf of usage between two charging opportunity and availability of batteries of different life-cycles, so as to optimize costs, weight, range etc. The logic control to use different battery-banks will help deliver the performance.

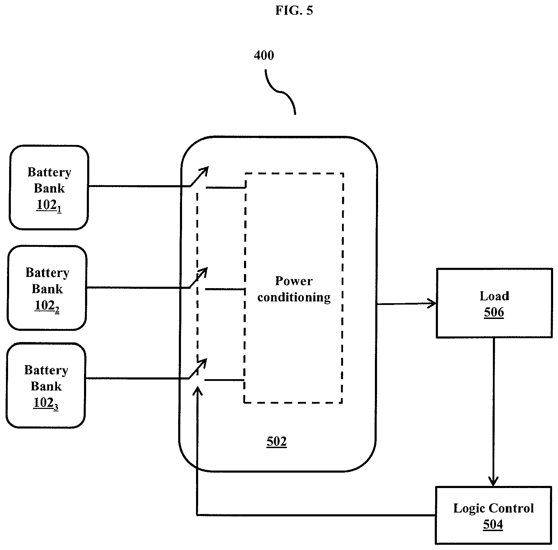

FIG. 5 illustrates an example implementation of energy storage system, according to an embodiment. In FIG. 5, the logic control unit504 controls how and which battery bank is connected to the load 506 through a switching mechanism shown in 502.

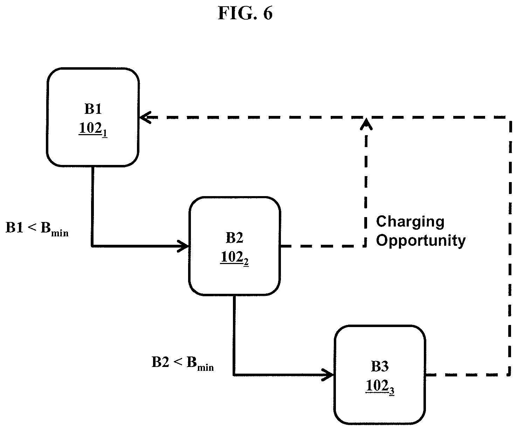

In an example implementation, the logic control unit 504 performs necessary logic operations to check configured threshold of the State of Charge (SOC) values for each battery bank, and switch from one battery bank to another. If Bₘᵢₙ is the minimum threshold battery SOC level for each battery bank, the logic control unit switches to the next battery when a battery bank hits the threshold SOC level. FIG. 6 illustrates the switching of the batteries based on a single threshold minimum SOC Bₘᵢₙ in a three bank battery system, according to a preferred embodiment. According to FIG. 6, the system starts with battery bank B1, and switches to B2 when B1 hits the SOC level Bₘᵢₙ, and subsequently from B2 to B3 when B2 hits the minimum configured SOC level and so on until next charging. When next charging happens, the system reverts to using battery bank B1 and the same flow continues.

In other embodiments, different minimum threshold SOC levels can be configured for each of the battery banks individually.

In various embodiments, the logic control unit can be configured with preset power harnessing modes. A power harnessing mode as well as selection of banks is uniquely defined and customized for specific user-behavior types (city driving, long-distance driving, taxis etc.) or specific locations based on one or more usage parameters including but not limited to DoD, charging rate, temperature of the system, speed of operation, rate of power (or fuel) consumption, operational load, and other internal and external environmental factors. Further, the logic control unit can be configured to automatically switch from one power harnessing mode to another based on parameter specific threshold levels similar to SOC threshold levels. The parameter specific threshold levels can be pre-configured or configured on the fly as and when needed.

In some embodiments, the logic control and splitting of battery can be pre-configured based on an initial pdf as provided in FIG. 4 based on anticipated usage patterns. The logic control can adapt to changes in usage patterns over a period of time to derive an updated pdf based on actual usage patterns. The updated usage patterns then influence the way the various battery banks are used by the logic control to maximize the life of the batteries.

Another method of using different banks, given the pdf of usage between two charging opportunity similar to that in FIG. 4, is to have three banks of same kind, but rotate the starting of usage. For example, in the first drive B1 will be used, followed by B2 and then only B3. In the second drive, one would start with using B2 and then use B3, followed by B1. In drive three, one would start with B3, follow it up with B1 and then B2. Now given the pdf, 30% of time only the second bank would be used and only 5% of time, the third bank will be used. So in each drive mostly one bank will be used, where sometimes a second or third will be used. Given the usage statistics of Fig. 4, one can compute that for every three drives, each bank would be used 1.35 times. Thus for 3000 drives (between two charging cycles), each bank would be used only 3000*1.35/3 or 1350 times. Thus none of the banks need to be any more than 1350 cycles as opposed to 3000 cycles in single bank battery. This would reduce costs considerably. And the same battery chemistry can be used for all three banks. Further, the charging methodology will have to be appropriately modified.

It can be shown that given the pdf of usage between charging opportunities, the batteries can be divided into any number of banks of equal or unequal size, and use the banks one at a time to drive advantage. In fact, the splitting can be done in infinite banks of infinitely small get the maximum advantage. However, as the usage pattern and pdf of usage may change from customer to customer, the controller has to learn the behavior and optimize the usage. The controller can ensure all banks will be used to full life even with changing behavior, using rotation as described herein,.

### Power considerations

The auto-batteries are not only discharged during a drive, but could also be charged using regenerative breaking. So far we dealt with situation where a logic unit will select only one bank at a time during discharging; the same bank would be charged during regenerative breaking. We now discuss the situation where both during discharge and charge (due to regenerative breaking), it may be advantageous to use more than one bank simultaneously. Each battery bank has a charging-discharging rate called C-rate, which must not exceed a certain rate (called maximum C-rate for a battery) depending on the total capacity of the battery for life-time to be not impacted. For example, if the maximum C-rate is specified at 1C and the battery in a bank is 10kWh (kilo-watt hour), the charging and discharging rates should generally be limited to 10 kW (kilo Watt). It is possible that vehicle may demand more than this power at a time or the regenerative breaking may produce more power at some time. Rather than using the battery beyond the C-rate, it may be advisable to combine two battery banks at that time. Since such occurrences are going to be uncommon, the combined usage of banks does not adversely impact the overall scheme.

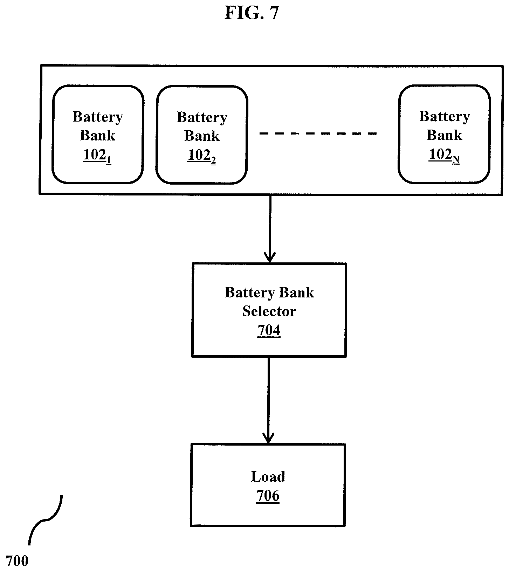

Accordingly, FIG. 7 illustrates an energy storage system to provide power to a load 706, according to an embodiment. The system includes a plurality of battery banks of varying characteristics, connected to a battery bank selector 704.In FIG. 7, the battery bank selector 704 is a logic unit as shown in FIG. 5 with the additional functionality to select multiple battery banks based on pre-configured power harnessing modes, and individual parameter specific thresholds. In scenarios where performance of a single battery bank is not adequate, the battery bank selector 704 can be used to combine output from more than one battery banks to supply power to the load 706. This may be especially required when load is varying.

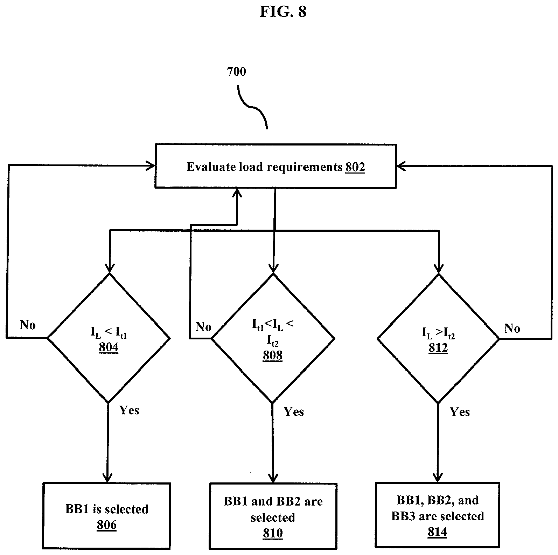

An example logic for switching from using single battery bank to using multiple battery banks is illustrated in FIG. 8 in the form of a flow chart, where I_{L} refers to the current demanded by the load, Iₜ₁ refers to a first (lower) current threshold, and Iₜ₂ refers to a second (upper) current threshold.

According to FIG. 8, at step 802, the battery bank selector evaluates load requirements of the system. At step 804, according to the selection criteria, if the current requirement of the load (I_{L}) is less than the lower threshold (Iₜ₁), then battery bank B1 is selected for use at step 806. Similarly, at step 808, if the current required by load (I_{L}) is greater than the lower current threshold (Iₜ₁) but lesser than the upper current threshold (Iₜ₂), then B1 and B2 are selected to supply to the load at step 810. And, at step 812, if current required by load (I_{L}) is greater than the upper current threshold (Iₜ₂) then at step 814, B1, B2, and B3 are selected.

In an embodiment, Iₜ₁ can be the maximum current that can be drawn from B1 alone, and Iₜ₂ can be the maximum current that can be drawn from B1 and B2 combined. While the example provided is for discharging, it is equally valid for charging.

There may be a rare situation that some of the banks are already discharged and higher C-rate than that recommended by a single battery bank is required. There are too options then. One is to use some of the battery banks beyond the normal DOD or discharge a single bank beyond the specified C-rate while the other alternative is to not provide the extra current impacting the vehicle's ability to accelerate when all but one bank is alive.

### General Disclaimers

In the example embodiments described herein, a vehicle such as an electric vehicle is used as an example application. However, it will be evident to a person skilled in the art that the same arrangement of batteries can be used in other systems including but not limited to a computer, a consumer electronic device, a home appliance, other automobiles, power backup, or the like. For example, back-up generation is required for power failures up to 2 days. Instead of having same power source / back up source for two days, one can choose to have one source, which would be used very often for 4 hours. Another source which would be used once in a while, providing back-up for the next 8 hours. And a third source, used rarely, providing power for 36 hours. The fact that the usage is very frequent for first and highly infrequent for third, could be used to provide optimum costs with three different sources.

The battery bank selector and the logic unit described herein can be a Battery Management System, an Energy Management system, or any other hardware unit configured for pre-configured or selective engagement of battery banks to augment life, performance and capacity of overall battery banks in a situation where battery charging opportunity availability may vary from day to day.

The embodiments disclosed herein can be implemented through at least one software program running on at least one hardware device and performing network management functions to control the elements. The elements shown in the FIGS. 1 through 8 include blocks which can be at least one of a hardware device, or a combination of hardware device and software units.

The foregoing description of the specific embodiments will so fully reveal the general nature of the embodiments herein that others can, by applying current knowledge, readily modify or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within scope of the embodiments as described herein.

## Claims

1. An energy storage system comprising:
a plurality of battery banks (102₁, 102₂, and 103₃) of individual batteries based on split configuration derived by a splitter, wherein split battery configuration of the plurality of banks (102₁, 102₂, and 103₃) varies based on a probability distribution function pdf of expected usage pattern, optimization goal, and battery characteristics of a corresponding single battery system; and
a logic unit (504), pre-configured with the pdf and connected to the plurality of battery banks (102₁, 102₂, and 103₃), configured to:
obtain performance data of each of the battery banks;
select at least one battery bank, from the plurality of battery banks (102₁, 102₂, and 103₃), to provide power to a load (506) based on performance data of each said battery banks and at least one selection criterion; and
driving battery bank in sequential order from the plurality of battery banks (102₁, 102₂, and 103₃) until next charging opportunity;
wherein the split from a single battery bank is to optimize at least one among cost, weight or size of the system; and
wherein the selection of at least one battery bank is based on the pdf; and
wherein the selection of battery banks is to optimize at least one among weight, cost, size, and life of the system for the usage pattern without compromising on the range of the system.

2. The system of claim 1, wherein characteristic of each battery bank is different based on at least one among chemistry, variability in chemistry, energy density, size, weight, and cost.

3. The system of claim 1, wherein the required storage capacity is obtained by using plurality of battery banks (102₁, 102₂, and 103₃) aiding the performance, and reducing the total cost of the system by using the required battery bank or battery banks according to the selection criterion.

4. The system of claim 1, wherein said criteria is configured to select a battery bank out of the plurality of battery banks (102₁, 102₂, and 103₃) in a sequential order according to usage requirements based on pre-defined priorities for the plurality of battery banks (102₁, 102₂, and 1033) or in an adaptive manner based on the matrices chosen for a given application.

5. The system of claim 1, wherein the logic unit (504) is further configured to dynamically switch from a first energy harnessing mode to a second energy harnessing mode, wherein said harnessing modes are based on usage parameters.

6. The system of claim 1, wherein the selection criteria comprises at least one threshold dynamically defined based on the plurality of usage parameters.

7. The system of claim 4, claim 5, and claim 6, wherein the selection criteria depends upon the said battery usage parameters comprising at least one among Depth of Discharge DoD, rate of charging, rate of discharging, and operation temperature which vary based on the application usage of the system.

8. The system of claim 1, wherein performance data comprises at least one of a state of charge, generated current, generated voltage, state of health and lifetime of at least one of the battery banks.

9. The system of claim 1, said logic unit (504) further configured to update its logic based on said pre-configured pdf with an updated pdf based on actual usage patterns observed.

10. The system of claim 1, wherein frequency of use of different battery banks and life of the batteries from said plurality of battery banks (102₁, 102₂, and 103₃) varies based on usage probability distribution function in use.

11. An energy management method for an energy storage system configured with a plurality of battery banks (102₁, 102₂, and 103₃), the method comprising:
deriving a split battery configuration with a plurality of battery banks (102₁, 102₂, and 103₃) by a splitter, wherein the split battery configuration of the plurality of banks (102₁, 102₂, and 103₃) varies based on a probability distribution function pdf of expected usage pattern, optimization goal, and battery characteristics of a corresponding single battery system;
obtaining, by the energy storage system, performance data of said plurality of battery banks (102₁, 102₂, and 103₃);
selecting, by the energy storage system, at least one battery bank to provide power to a load (506) based on desired performance and at least one selection criterion; and
driving battery bank in sequential order from the plurality of battery banks (102₁, 102₂, and 1033) until next charging opportunity,
wherein the split from a single battery bank is to optimize at least one among cost, weight or size of the system and wherein the selection of at least one battery bank is based on the pdf, and wherein the selection of battery banks is to optimize at least one among weight, cost, size, and life of the system for the usage pattern without compromising on the range of the system.

12. The method of claim 11, wherein characteristic of each battery bank is different based on at least one among chemistry, variability in chemistry, energy density, size, weight, and cost.

13. The method of claim 11, wherein the required storage capacity is obtained by using plurality of battery banks (102₁, 102₂, and 103₃) aiding the performance, and reducing the total cost of the system by using the required battery bank or battery banks according to the selection criterion.

14. The method of claim 11, wherein said criteria is configured to select a battery bank out of the plurality of battery banks (102₁, 102₂, and 103₃) in a sequential order according to usage requirements based on pre-defined priorities for the plurality of battery banks (102₁, 1022, and 1033) or in an adaptive manner based on the matrices chosen for a given application.

15. The method of claim 13, wherein the logic unit (504) is further configured to dynamically switch from a first energy harnessing mode to a second energy harnessing mode, wherein said harnessing modes are based on usage parameters.

16. The method of claim 11, wherein the selection criteria comprises at least one threshold dynamically defined based on the plurality of usage parameters.

17. The method of claim 14, claim 15, and claim 16, wherein the selection criteria depends upon the said battery usage parameters comprising at least one among Depth of Discharge DoD, rate of charging, rate of discharging, and operation temperature which vary based on the application usage of the system.

18. The method of claim 11, wherein performance data comprises at least one of a state of charge, generated current, generated voltage, state of health and lifetime of at least one of the battery banks.

19. The method of claim 11, said logic unit (504) further configured to update its logic based on said pre-configured pdf with an updated pdf based on actual usage patterns observed.

20. The method of claim 11, wherein frequency of use of different battery banks and life of the batteries from said plurality of battery banks (102₁, 102₂, and 103₃) varies based on usage probability distribution function in use.

## Patentansprüche

1. Energiespeichersystem, das Folgendes aufweist:
eine Vielzahl von Batteriebänken (102₁, 102₂ und 103₃) aus einzelnen Batterien auf der Basis einer durch einen Teiler abgeleiteten Teilungskonfiguration, wobei die Batterieteilungskonfiguration der Vielzahl von Bänken (102₁, 102₂ und 103₃) auf der Basis einer Wahrscheinlichkeits-Verteilungsfunktion pdf des erwarteten Nutzungsmusters, des Optimierungsziels und der Batterieeigenschaften eines entsprechenden einzelnen Batteriesystems variiert; und
eine Logikeinheit (504), die mit der pdf vorkonfiguriert und mit der Vielzahl von Batteriebänken (102₁, 102₂ und 103₃) verbunden ist und dazu ausgebildet ist:
- Leistungsdaten von jeder der Batteriebänke zu erhalten;
- mindestens eine Batteriebank aus der Vielzahl von Batteriebänken (102₁, 102₂ und 103₃) auszuwählen, um eine Last (506) auf der Basis von Leistungsdaten jeder der Batteriebänke und mindestens einem Auswahlkriterium mit Energie zu versorgen; und
- die Batteriebänke in sequentieller Reihenfolge von der Vielzahl von Batteriebänken (102₁, 102₂ und 103₃) bis zur nächsten Ladegelegenheit anzusteuern;
- wobei die Teilung von einer einzelnen Batteriebank mindestens einen Parameter von den Kosten, dem Gewicht oder der Größe des Systems optimieren soll; und
- wobei die Auswahl von mindestens einer Batteriebank auf der pdf basiert; und
- wobei die Auswahl von Batteriebänken mindestens einen Parameter von dem Gewicht, den Kosten, der Größe und der Lebensdauer des Systems für das Nutzungsmuster optimieren soll, ohne die Reichweite des Systems zu beeinträchtigen.

2. System nach Anspruch 1,
wobei die Charakteristik jeder Batteriebank auf der Basis von mindestens einem Parameter von der chemischen Zusammensetzung, der Variabilität in der chemischen Zusammensetzung, der Energiedichte, der Größe, dem Gewicht und den Kosten unterschiedlich ist.

3. System nach Anspruch 1,
wobei die erforderliche Speicherkapazität erhalten wird, indem ein Vielzahl von Batteriebänken (102₁, 102₂ und 103₃) verwendet wird, die die Leistung unterstützen, und die Gesamtkosten des Systems reduziert werden, indem die erforderliche Batteriebank oder die erforderlichen Batteriebänke in Abhängkeit von dem Auswahlkriterium verwendet werden.

4. System nach Anspruch 1,
wobei das Kriterium dazu ausgebildet ist, eine Batteriebank aus der Vielzahl von Batteriebänken (102₁, 102₂ und 103₃) in einer sequentiellen Reihenfolge in Abhängigkeit von Nutzungsanforderungen auf der Basis von vordefinierten Prioritäten für die Vielzahl von Batteriebänken (102₁, 102₂ und 103₃) oder in adaptiver Weise auf der Basis der für eine bestimmte Anwendung gewählten Matrizes auszuwählen.

5. System nach Anspruch 1,
wobei die Logikeinheit (504) ferner dazu ausgebildet ist, dynamisch von einem ersten Energiegewinnungsmodus auf einen zweiten Energiegewinnungsmodus umzuschalten, wobei die Gewinnungsmodi auf Nutzungsparametern basieren.

6. System nach Anspruch 1,
wobei das Auswahlkriterium mindestens einen Schwellenwert umfasst, der auf der Basis der Vielzahl von Nutzungsparametern dynamisch definiert wird.

7. System nach Anspruch 4, Anspruch 5 und Anspruch 6,
wobei das Auswahlkriterium von den Batterienutzungsparametern abhängig ist, die mindestens einen Parameter von der Entladungstiefe DoD, der Aufladungsrate, der Entladungsrate und der Betriebstemperatur umfassen, die auf der Basis der Anwendungsnutzung des Systems variieren.

8. System nach Anspruch 1,
wobei die Leistungsdaten mindestens einen Parameter von einem Ladungszustand, einem erzeugten Strom, einer erzeugten Spannung, einem Gesundheitszustand und einer Lebensdauer von mindestens einer der Batteriebänke umfassen.

9. System nach Anspruch 1,
wobei die Logikeinheit (504) ferner dazu ausgebildet, ihre Logik auf der Basis der vorkonfigurierten pdf mit einer aktualisierten pdf auf der Basis von beobachteten tatsächlichen Nutzungsmustern zu aktualisieren.

10. System nach Anspruch 1,
wobei die Häufigkeit der Verwendung von verschiedenen Batteriebänken sowie die Lebensdauer der Batterien aus der Vielzahl von Batteriebänken (102₁, 102₂ und 103₃) auf der Basis der Nutzungswahrscheinlichkeits-Verteilungsfunktion im Gebrauch variiert.

11. Energiemanagementverfahren für ein Energiespeichersystem, das mit einer Vielzahl von Batteriebänken (102₁, 102₂ und 103₃) ausgebildet ist, wobei das Verfahren folgende Schritte aufweist:
- Ableiten einer Batterieteilungskonfiguration mit einer Vielzahl von Batteriebänken (102₁, 102₂ und 103₃) mittels eines Teilers, wobei die Batterieteilungskonfiguration der Vielzahl von Bänken (102₁, 102₂ und 103₃) auf der Basis von einer Wahrscheinlichkeits-Verteilungsfunktion pdf des erwarteten Nutzungsmusters, des Optimierungsziels und der Batterieeigenschaften eines entsprechenden einzelnen Batteriesystems variiert;
- durch das Energiespeichersystem erfolgendes Erhalten von Leistungsdaten der Vielzahl von Batteriebänken (102₁, 102₂ und 103₃);
- durch das Energiespeichersystem erfolgendes Auswählen von mindestens einer Batteriebank, um eine Last (506) auf der Basis der gewünschten Leistung und mindestens einem Auswahlkriterium mit Energie zu versorgen; und
- in sequentieller Reihenfolge erfolgendes Ansteuern von Batteriebänken von der Vielzahl von Batteriebänken (102₁, 102₂ und 103₃) bis zur nächsten Ladegelegenheit,
- wobei die Teilung von einer einzelnen Batteriebank mindestens einen Parameter von den Kosten, dem Gewicht oder der Größe des Systems optimieren soll, und wobei die Auswahl von mindestens einer Batteriebank auf der pdf basiert, und wobei die Auswahl von Batteriebänken mindestens einen Parameter von dem Gewicht, den Kosten, der Größe und der Lebensdauer des Systems für das Nutzungsmuster optimieren soll, ohne die Reichweite des Systems zu beeinträchtigen.

12. Verfahren nach Anspruch 11,
wobei die Charakteristik jeder Batteriebank auf der Basis von mindestens einem Parameter von der chemischen Zusammensetzung, der Variabilität in der chemischen Zusammensetzung, der Energiedichte, der Größe, dem Gewicht und den Kosten unterschiedlich ist.

13. Verfahren nach Anspruch 11,
wobei die erforderliche Speicherkapazität erhalten wird, indem eine Vielzahl von Batteriebänken (102₁, 102₂ und 103₃) verwendet wird, die die Leistung unterstützen, und die Gesamtkosten des Systems reduziert werden, indem die erforderliche Batteriebank oder die erforderlichen Batteriebänke in Abhängigkeit von dem Auswahlkriterium verwendet werden.

14. Verfahren nach Anspruch 11,
wobei das Kriterium dazu ausgebildet ist, eine Batteriebank aus der Vielzahl von Batteriebänken (102₁, 102₂ und 103₃) in einer sequentiellen Reihenfolge in Abhängigkeit von Nutzungserfordernissen auf der Basis von vordefinierten Prioritäten für die Vielzahl von Batteriebanken (102₁, 102₂ und 103₃) oder in adaptiver Weise auf der Basis der für eine bestimmte Anwendung gewählten Matrizes auszuwählen.

15. Verfahren nach Anspruch 13,
wobei die Logikeinheit (504) ferner dazu ausgebildet ist, dynamisch von einem ersten Energiegewinnungsmodus auf einen zweiten Energiegewinnungsmodus umzuschalten, wobei die Gewinnungsmodi auf Nutzungsparametern basieren.

16. Verfahren nach Anspruch 11,
wobei das Auswahlkriterium mindestens einen Schwellenwert umfasst, der auf der Basis der Vielzahl von Nutzungsparametern dynamisch definiert wird.

17. Verfahren nach Anspruch 14, Anspruch 15 und Anspruch 16,
wobei das Auswahlkriterium von den Batterienutzungsparametern abhängig ist, die mindestens einen Parameter von der Entladungtiefe DoD, der Aufladungsrate, der Entladungsrate und der Betriebstemperatur umfassen, die auf der Basis der Anwendungsnutzung des Systems variieren.

18. Verfahren nach Anspruch 11,
wobei die Leistungsdaten mindestens einen Parameter von einem Ladungszustand, einem erzeugten Strom, einer erzeugten Spannung, einem Gesundheitszustand und einer Lebensdauer von mindestens einer der Batteriebänke umfassen.

19. Verfahren nach Anspruch 11,
wobei die Logikeinheit (504) ferner dazu ausgebildet ist, ihre Logik auf der Basis der vorkonfigurierten pdf mit einer aktualisierten pdf auf der Basis von beobachteten tatsächlichen Nutzungsmustern zu aktualisieren.

20. Verfahren nach Anspruch 11,
wobei die Häufigkeit der Verwendung von verschiedenen Batteriebänken sowie die Lebensdauer der Batterien aus der Vielzahl von Batteriebänken (102₁, 102₂ und 103₃) auf der Basis der Nutzungswahrscheinlichkeits-Verteilungsfunktion im Gebrauch variiert.

## Revendications

1. Système de stockage d'énergie comprenant :
une pluralité de bancs de batteries (102₁, 102₂ et 102₃) de batteries individuelles basées sur une configuration partagée dérivée d'un diviseur, selon lequel la configuration de batterie partagée de la pluralité de bancs de batteries (102₁, 102₂ et 102₃) varie en fonction d'une fonction de distribution probable (pdf) d'un motif d'utilisation attendue, d'objectif d'optimisation, et de caractéristiques de batterie d'un seul système de batterie correspondant ; et
une unité de logique (504), pré-configurée avec la fonction de distribution probable (pdf) et connectée à la pluralité de bancs de batteries (102₁, 102₂ et 102₃), et configurée pour :
obtenir des données de performance de chacun des bancs de batteries ;
choisir au moins un banc de batteries, à partir de la pluralité de bancs de batteries (102₁, 102₂ et 102₃), pour fournir une alimentation à une charge (506) sur la base des données de performance de chacun des bancs de batteries et au moins un critère de sélection ; et
actionner le banc de batteries en ordre séquentiel à partir de la pluralité de bancs de batteries (102₁, 1022 et 102₃) jusqu'à l'occasion suivante de charge ;
selon lequel le partage opéré sur un seul banc de batteries est une optimisation d'au moins un élément choisi parmi le coût, le poids, et la taille du système ; et
selon lequel la sélection d'au moins un banc de batteries est basée sur la fonction de distribution probable (pdf) ; et
selon lequel la sélection opérée sur les bancs de batteries est une optimisation d'au moins un élément choisi parmi le coût, le poids, la taille, et la durée du système par rapport au motif d'utilisation sans compromettre la portée du système.

2. Système selon la revendication 1, selon lequel la caractéristique de chaque banc de batteries est différente sur la base d'au moins un élément choisi parmi la chimie, la variabilité en chimie, la densité énergétique, la taille, le poids, et le coût.

3. Système selon la revendication 1, selon lequel la capacité de stockage requise est obtenue en mettant en oeuvre la pluralité de bancs de batteries (102₁, 102₂ et 1023) pour améliorer la performance et réduire le coût total du système par le biais de l'utilisation du banc ou des bancs de batteries requis selon le critère de sélection.

4. Système selon la revendication 1, selon lequel ledit critère est configuré pour sélectionner un banc de batteries parmi la pluralité de bancs de batteries (102₁, 102₂ et 102₃) dans un ordre séquentiel selon des besoins en utilisation sur la base de priorités prédéfinies par rapport à la pluralité de bancs de batteries (102₁, 102₂ et 102₃) ou de manière adaptative sur la base de matrices choisies par rapport à une application donnée.

5. Système selon la revendication 1, selon lequel l'unité de logique (504) est en outre configurée pour commuter de manière dynamique d'un premier mode de capture d'énergie vers un deuxième mode de capture d'énergie, selon lequel les modes de capture d'énergie sont basés sur des paramètres d'utilisation.

6. Système selon la revendication 1, selon lequel le critère de sélection comprend au moins un seuil défini de manière dynamique sur la base de la pluralité de paramètres d'utilisation.

7. Système selon les revendications 4, 5 et 6, selon lequel le critère de sélection dépend de ce que lesdits paramètres d'utilisation de batterie comprennent au moins un élément parmi la profondeur de décharge (DoD), le taux de charge, le taux de décharge, et la température de fonctionnement, qui varient en fonction de l'utilisation relative à l'application du système.

8. Système selon la revendication 1, selon lequel les données de performance comprennent au moins un élément parmi un état de charge, un courant généré, une tension générée, un état de santé, et une durée d'au moins un des bancs de batteries.

9. Système selon la revendication 1, selon lequel l'unité de logique (504) est en outre configurée pour mettre à jour sa logique basée sur ladite fonction de distribution probable (pdf) avec une fonction de distribution probable (pdf) actualisée basée sur les motifs d'utilisation réellement observés.

10. Système selon la revendication 1, selon lequel la fréquence d'utilisation des différents bancs de batteries et de la durée des batteries à partir de la pluralité de bancs de batteries (102₁, 102₂ et 102₃) varient en fonction de la fonction de distribution probable en cours d'utilisation.

11. Procédé de gestion d'énergie destiné à un système de stockage d'énergie configuré avec une pluralité de banc de batteries (102₁, 102₂ et 102₃), le procédé comprenant :
la dérivation d'une configuration de partage de batterie avec une pluralité de banc de batteries (102₁, 102₂ et 102₃) par le biais d'un diviseur, selon laquelle la configuration de batterie partagée de la pluralité de banc de batteries (102₁, 102₂ et 102₃) varie en fonction d'une fonction de distribution probable (pdf) d'un motif d'utilisation attendue, d'objectif d'optimisation, et de caractéristiques de batterie d'un seul système de batterie correspondant ;
l'obtention, par le biais du système de stockage d'énergie, de données de performance de ladite pluralité de bancs de batteries (102₁, 102₂ et 102₃) ;
la sélection, par le biais du système de stockage d'énergie, d'au moins un banc de batteries pour fournir une alimentation à une charge (506) sur la base de la performance souhaitée et d'au moins un critère de sélection ; et
l'actionnement du banc de batteries en ordre séquentiel à partir de la pluralité de bancs de batteries (102₁, 102₂ et 102₃) jusqu'à l'occasion suivante de charge ;
procédé selon lequel le partage opéré sur un seul banc de batteries est une optimisation d'au moins un élément choisi parmi le coût, le poids, et la taille du système, et selon lequel la sélection d'au moins un banc de batteries est basée sur la fonction de distribution probable (pdf), et selon lequel la sélection opérée sur les bancs de batteries est une optimisation d'au moins un élément choisi parmi le poids, le coût, la taille, et la durée du système par rapport au motif d'utilisation sans compromettre la portée du système.

12. Procédé selon la revendication 11, selon lequel la caractéristique de chaque banc de batteries est différente sur la base d'au moins un élément choisi parmi la chimie, la variabilité en chimie, la densité énergétique, la taille, le poids, et le coût.

13. Procédé selon la revendication 11, selon lequel la capacité de stockage requise est obtenue en mettant en oeuvre la pluralité de bancs de batteries (102₁, 102₂ et 102₃) pour améliorer la performance et réduire le coût total du système par le biais de l'utilisation du banc ou des bancs de batteries requis selon le critère de sélection.

14. Procédé selon la revendication 11, selon lequel ledit critère est configuré pour sélectionner un banc de batteries parmi la pluralité de bancs de batteries (102₁, 102₂ et 102₃) dans un ordre séquentiel selon des besoins en utilisation sur la base de priorités prédéfinies par rapport à la pluralité de bancs de batteries (102₁, 102₂ et 102₃) ou de manière adaptative sur la base de matrices choisies par rapport à une application donnée.

15. Procédé selon la revendication 13, selon lequel l'unité de logique (504) est en outre configurée pour commuter de manière dynamique d'un premier mode de capture d'énergie vers un deuxième mode de capture d'énergie, selon lequel les modes de capture d'énergie sont basés sur des paramètres d'utilisation.

16. Procédé selon la revendication 11, selon lequel le critère de sélection comprend au moins un seuil défini de manière dynamique sur la base de la pluralité de paramètres d'utilisation.

17. Procédé selon les revendications 14, 15 et 16, selon lequel le critère de sélection dépend de ce que lesdits paramètres d'utilisation de batterie comprennent au moins un élément parmi la profondeur de décharge (DoD), le taux de charge, le taux de décharge, et la température de fonctionnement, qui varient en fonction de l'utilisation relative à l'application du système.

18. Procédé selon la revendication 11, selon lequel les données de performance comprennent au moins un élément parmi un état de charge, un courant généré, une tension générée, un état de santé, et une durée d'au moins un des bancs de batteries.

19. Procédé selon la revendication 11, selon lequel l'unité de logique (504) est en outre configurée pour mettre à jour sa logique basée sur ladite fonction de distribution probable (pdf) avec une fonction de distribution probable (pdf) actualisée basée sur les motifs d'utilisation réellement observés.

20. Procédé selon la revendication 11, selon lequel la fréquence d'utilisation des différents bancs de batteries et de la durée des batteries à partir de la pluralité de bancs de batteries (102₁, 102₂ et 102₃) varient en fonction de la fonction de distribution probable en cours d'utilisation.
